Europäisches Patentamt

European Patent Office

Office européen des brevets

(11) Publication number: **0 346 787**

**A1**

# EUROPEAN PATENT APPLICATION

(21) Application number: **89110549.6**

(22) Date of filing: **10.06.89**

(51) Int. Cl.⁴: **A01D 34/17 , A01D 34/13**

(30) Priority: **17.06.88 IT 2102888**

(43) Date of publication of application:
**20.12.89 Bulletin 89/51**

(84) Designated Contracting States:
**AT DE IT**

(71) Applicant: **BCS S.p.A.**
**Viale Mazzini 161**
**I-20081 Abbiategrasso Milan(IT)**

(72) Inventor: **Castoldi, Luigi**
**Via De Amicis 19**
**I-20081 Abbiategrasso Milan(IT)**

(74) Representative: **Garrone, Fernando**
**Internazionale Brevetti s.r.l. Via Brentano 2**
**I-20121 Milano(IT)**

(54) **Improved mowing device.**

(57) The present invention relates to a mowing device for power mowers including a cutter provided with cutting elements having side edges (43, 44), formed to exert a cutting action, and a blade-presser engaging the cutting elements from above. The side edges extend rearwardly substantially to touch the operative region (45) of the blade-presser.

FIG. 3

EP 0 346 787 A1

## IMPROVED MOWING DEVICE

The present invention relates to an improved mowing device for mowing machines, particularly power mowers, with improved efficiency of cutting, a reduced wear of the moving elements in the reciprocating cutting action and a lower manufacturing cost.

Some of the known mowing machines require more power than expected relatively to their function and structure.

It has also been observed that the moving elements wear out too rapidly, regardless of their precise working in manufacturing and high quality materials. By gathering experimental data, the applicant has been able to determine that the causes of these flaws are the following.

Whatever the type of mowing device used in a mowing machine, usually the mowing device comprises a reciprocating cutter having a plurality of blades generally of trapezoidal shape.

The blades are biased by blade-pressers against an abutting element typically constituted by a comb having teeth extending in the front direction.

The blades are sharpened at the down facing side only and therefore the up facing side and back side of the blades exert no cutting action. Consequently, part of the cut grass is dragged by the reciprocating motion of the cutter in between the back side of the blades and the blade-presser causing the above mentioned inconveniences.

The present invention prevents the occurrence of the above mentioned phenomena and eliminates said inconveniences. The mowing device according to the invention is characterized in that the cutter's blades are provided with sharpened side edges rearwardly extending substantially toward the operative region of the blade-presser. In the various embodiments of the invention the blades may be single, double or triple, i.e. constituted by one, two or three or more cutting elements, and may be provided with lightening holes or grooves together with passage holes for the elements connecting them to the cutter base rod. Moreover the cutter edge of the blades may be simply wedge sharpened or variably notched and knurled.

In a preferred embodiment of the invention the cutting elements have a trapezoidal "conjugated" shape such that, as will be better described later, they can be obtained from a strip of sheet metal without producing scraps.

Preferably, each cutting element also comprises a rear portion on which acts the blade-presser, and a cutting portion having a trapezoidal shape with convergent lateral edges, sharpened or however finished for exerting the necessary cutting action; the cutting portion is frontally delimited by an edge which is not sharpened and is connected to the rear portion by two non sharpened edges, substantially parallel to the front edge and each being half as long as the front edge, and int his manner forming conjucated trapezoidal shapes.

This invention also relates to mowing machines having the above device according to the invention, the blades adapted to be used in said device and mowing machines, and the manufacturing process of said blades.

Other carachteristics, variants and advantages will be better understood from the description of an embodiment of the invention with reference to the enclosed drawings wherein:

Fig. 1 is a top view of a device of a mowing machine according to the prior art as described in the co-pending Patent Application N. 20892 A/87 by this same applicant;

Fig. 2 is a vertical section view taken along the cutter's axis of the device of Fig. 1;

Fig. 3 is a top view, similar to that of Fig.1, of a device according to the invention;

Fig. 4 is a vertical section view, taken along the cutter's axis of the device of Fig. 3;

Figs. 5a and 5b are respectively a top view of a blade, according to the invention and constituted by a single cutting element, and a section view taken along the line 5a-5b of Fig. 5a;

Fig. 6 schematically shows how to produce the conjucated shape blade according to the invention from a strip of sheet metal.

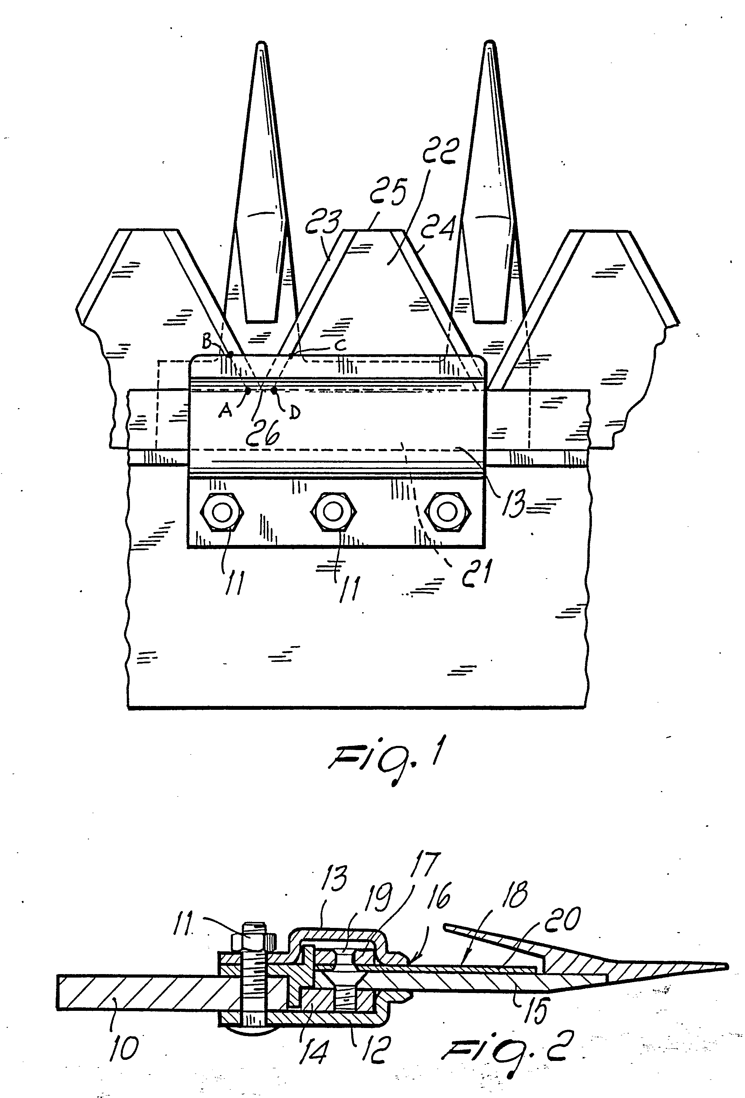

With reference to the cited drawings, Figs. 1 and 2 show a portion of a device for mowing machines as described in the co-pending Patent Application N. 20892 A/87. It is intended that the present invention relates to any device for mowing machines even diverse from the one described in the cited application and in particular to machines known before the cited application.

The device illustrated in Figs. 1 and 2 is therefore solely an example of a preferred an not exclusive embodiment of the invention.

Two shaped sheet 12 and 13 are fixed to a support bar 10, designated by the numeral 10, by bolts 11; the sheets 12,13 define a box portion between them and, in the illustrated example, are divided in different pieces, as seen in Fig. 1, but may also be in one continuous piece.

The lower sheet 12 supports the rod 14, which is the base rod of the comb formed by teeth 15. The upper sheet 13 is curved downwardly to form an edge 16 defining the active portion of the blade-presser. Also the base rod 17 of the cutter, generally indicated by the numeral 18 runs between the two sheets, and it supports the blades 19 by means of nails 19.

As seen in Fig. 1, each of the cutting elements (which in this case correspond to the blades since each blade is constituted by one cutting element ) comprise a rectangular rear portion 21, by which they are fixed to the base rod 17, and an active, i.e. cutting, portion 22 which extend frontally and has a trapezoidal shape with the greater base connected to said rear portion.

Portion 22 is also delimited laterally by two sharpened, convergent edges 23 , 24 and, frontally, by a segment 25, which is not sharpened and it is parallel to the front of the machine and also constitutes the minor base of the trapezoidal shape. The edge 23 of each of the cutting elements, and the edge 24 of the adjacent element are joined to form a vertex 23. the backs of each pair of cutting elements thus form a trapezoidal portion A-B-C-D together with the blade-presser; along the edges of the trapezoidal portion, the backs touch the blade-presser while between the edges there is a hollow space. The grass is dragged in this hollow space, causing the described inconveniences.

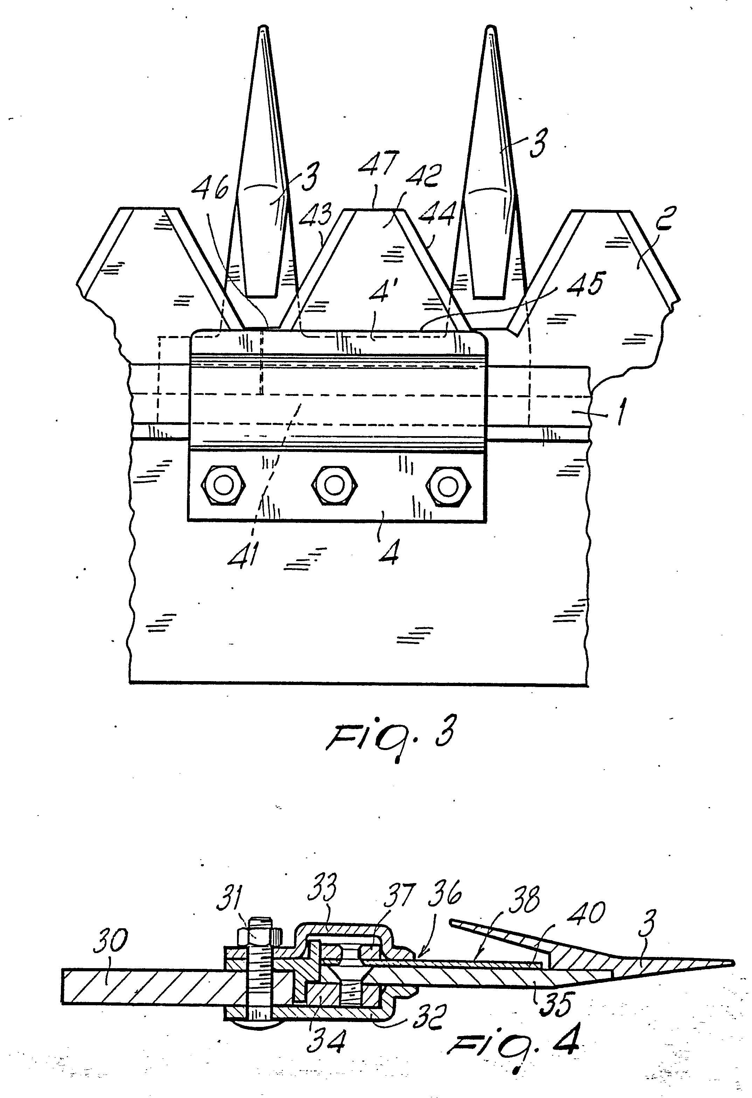

Figs. 3 and 4 illustrate how the invention is applied to the above described device. Fig. 4 is similar to Fig. 2 but for the numerals, since the characteristics of the invention are not visible in a side section view taken along the axis of the cutting elements. The numerals from 20 to 40 in these figures have the same significance of the numerals from 10 to 20 of Figs. 1 and 2. In Fig.3, the blades comprise more than one cutting element, in general two or three. Each cutting element comprises a rectangular rear portion 41 and an operative, trapezoidal, front portion 42; the greater base of the front portion is shorter than the rectangular rear portion and comprises a non sharpened front edge 47 and two sharpened, convergent edges 43, 44. The two convergent edges 43, 44 do not reach the blade-presser, as in the previously described known device, but extend just to reach the front edge 45 of the blade presser. Consequently they do not touch each other at their base but are spaced by a segment 46 which can be seen as formed half by each of the cutting element. In this manner, no portion of the sharpened edges lies under the blade-presser and there is no trapezoidal region A-B-C-D as described above.

Fig. 5a is a top view of a blade according to the invention, constituted by just one cutting element. It can be seen that it comprises a rectangular (rear) portion 41 and a cutting portion 42, having sharpened, convergent edges 43, 44, and a front non sharpened edge 47. At the sides of the sharpened edges, the knife has two non-sharpened segments parallel to the front edge indicated by 48, 48'. In the drawings, the edges are shown simply sharpened as a wedge, as best seen in Fig. 5b, but they can also be notched, knowled or otherwise finished and any finishing adapted to provide a cutting action should be included in the term "sharpened" for the present application.

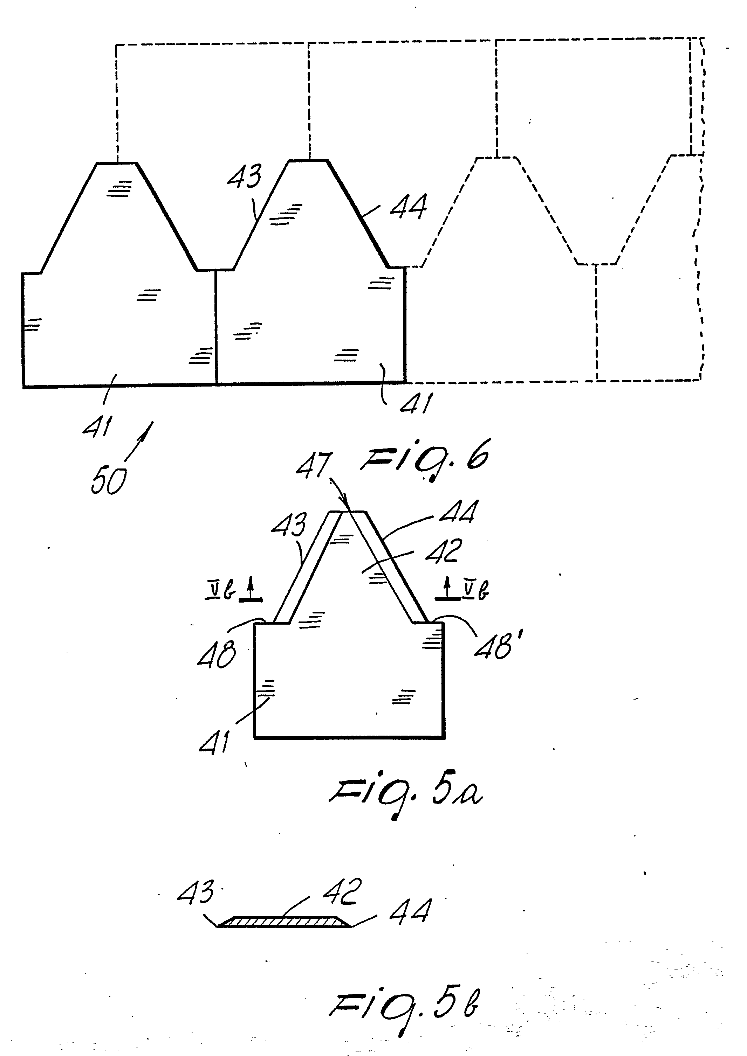

Fig. 6 illustrates a way of making the blades by shearing a strip of sheet metal 50. The numerals designate the same elements of Fig. 5a. In the illustrated example, each of the segments 49, 48' have a length which is one-half of that of the front edge 47. Their sum is therefore equal to the length of said edge. Such a construction, which is here defined "conjugated", allows the strip of sheet metal 50 to be sheared according to the edges of the cutting elements, or of the blades if they are made of several cutting elements, without producing scraps.

Example of embodiments have been illustrated but the invention is suscettible to variations that the man of the art can conceive other than those expressely indicated.

**Claims**

1. Mowing device for power mowers, comprising: a mowing blade provided with cutting elements having lateral edges adapted to cut, a blade-presser member engaging said cutting elements from above, characterized in that said lateral edges extend toward the rear of the machine to reach just the operative region of said blade-presser.

2. Device, according to claim 1, wherein said lateral edges of said cutting elements extend rearwardly just to reach the front edges of said blade-presser.

3. Device, according to claim 1 or 2, wherein a plurality of cutting elements are joined to form multiple blades.

4. Device, according to one or more of the preceeding claims, wherein said cutting elements have a conjugated configuration, as defined in the description.

5. Device according to one or more of the claims 1 to 4, wherein said lateral edges of said cutting elements are finished in order to exert a cutting action.

6. Device, according to claim 5, wherein said lateral edges are sharpened as a wedge.

7. A power mower provided with a device according to one or more of the preceeding claims.

8. A power mower according to the copending patent application N. 20892 A/87 and provided with a device according to one or more of the preceeding claims.

9. A process for producing blades, according to one or more of claims 1 to 6, characterized in that a strip of sheet metal is sheared to form a plurality of blades having a conjugated configuration, as defined in the description.

10. A blade for power mowers, comprising cutting elements constituted by a rectangular rear portion and a front cutting portion, characterized in that said cutting portion is delimited by a non sharpened front edge, by two sharpened, convergent edges and by two lateral, rear edges parallel to the front edge.

11. A blade, according to claim 10, having a conjugated configuration, as defined in the description.

12. A device for mowing machines, blades, power mowers, substantially as described and illustrated.

Fig. 1

Fig. 2

Fig. 3

Fig. 4

Fig. 6

Fig. 5a

Fig. 5b

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| X | FR-A-864306 (PIGNON)<br>* the whole document * | 1, 2, 5-8, 10, 12 | A01D34/17<br>A01D34/13 |
| Y | | 4, 9, 11 | |
| Y | US-A-3557538 (VANDEWALLE)<br>* column 3, line 16 - column 3, line 20; figure 6 * | 4, 9, 11 | |
| X | CH-A-121742 (KNECHT-ERNE)<br>* the whole document * | 1, 2, 5-8, 12 | |
| A | FR-A-2361049 (WHITE MOTOR CORPORATION OF CANADA)<br>* page 9, line 14 - page 9, line 25 * | 3 | |
| A | FR-A-597695 (LOURDIN) | | |
| A | GB-A-441298 (POPE) | | |
| A | FR-A-2178459 (E.M.A.N.I) | | |
| A | CH-A-359311 (GRIESSER) | | TECHNICAL FIELDS SEARCHED (Int. Cl.4 )<br><br>A01D |

The present search report has been drawn up for all claims

| Place of search | Date of completion of the search | Examiner |
|---|---|---|
| THE HAGUE | 18 AUGUST 1989 | DE LAMEILLIEURE D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 ........................................................................................

& : member of the same patent family, corresponding document

EPO FORM 1503 03.82 (P0401)